# EUROPEAN PATENT SPECIFICATION

(11) **EP 2 512 198 B1**
(45) Date of publication and mention of the grant of the patent: **17.06.2015**
(21) Application number: 10840599.4
(22) Date of filing: 30.12.2010
(51) Int. Cl.: H04W 52/02, H04W 72/00

(54) **METHOD AND APPARATUS FOR CONTENTION BASED RESOURCE CONFIGURATION**
VERFAHREN UND VORRICHTUNG ZUR KONFLIKTBASIERTEN RESSOURCENKONFIGURATION
PROCÉDÉ ET APPAREIL PERMETTANT UNE CONFIGURATION DE RESSOURCES BASÉES SUR LA CONTENTION

(30) Priority: 31.12.2009 CN 200910238879; 31.12.2009 CN 200910238884; 31.12.2009 CN 200910238885
(43) Date of publication of application: 17.10.2012
(73) Proprietor: Huawei Technologies Co., Ltd., Longgang District Shenzhen, Guangdong 518129 (CN)
(72) Inventor: QUAN, Wei, Shenzhen Guangdong 518129 (CN); ZHANG, Qiao, Shenzhen Guangdong 518129 (CN); HAN, Guanglin, Shenzhen Guangdong 518129 (CN); JIANG, Yi, Shenzhen Guangdong 518129 (CN); ZHANG, Jian, Shenzhen Guangdong 518129 (CN); QIN, Zhongbin, Shenzhen Guangdong 518129 (CN)
(74) Representative: Körber, Martin Hans
(86) International application number: PCT/CN2010/080546
(87) International publication number: WO 2011/079812

(56) References cited:
- EP-A2- 2 015 478
- EP-A2- 2 136 584
- WO-A1-2009/156826
- WO-A2-2008/157799
- CN-A- 1 996 806
- CN-A- 1 996 806
- CN-A- 101 005 695
- CN-A- 101 569 115
- CN-A- 101 569 115
- US-A1- 2009 190 572
- US-A1- 2009 259 910
- "3rd Generation Partnership Project; Technical Specification Group Radio Access Network; Evolved Universal Terrestrial Radio Access (E-UTRA) Medium Access Control (MAC) protocol specification (Release 8)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.5.0, 23 March 2009 (2009-03-23), pages 1-43, XP050377621,

## Description

### FIELD OF THE INVENTION

The present invention relates to the field of communications, and in particular, to a contention based resource configuration technology.

### BACKGROUND OF THE INVENTION

In a communication system, several solutions are proposed in order to reduce delay in a signaling plane and a user plane. The technical solutions include: reducing a scheduling period of an RACH (random access channel, Random Access Channel), reducing a period of a PUCCH (physical uplink control channel, Physical Uplink Control Channel), reducing processing delay of a UE (User Equipment, user equipment) and an eNB (Evolved Node B, evolved node B), and using a CB (Contention Based, contention based) resource for uplink transmission.

The use of the CB resource for uplink transmission enables a small amount of data be fast and effectively transmitted when there is no dedicated uplink transmission resource. The CB resource is not dedicated to a single UE, and can be used by all UEs in a cell.

A CB resource using method for uplink transmission is that: an eNB notifies, through a dedicated identifier CB-RNTI (Contention Based Radio Network Temporary Identifier, contention based radio network temporary identifier), all UEs in a cell of a Contention Based Uplink Grant (contention based uplink grant), which includes information, such as a used time-and-frequency resource and size, and a used MCS (Modulation and Coding Scheme, modulation and coding scheme). Especially, in the case of low network load, a user can implement uplink transmission of data as soon as possible by allocating the CB resource.

However, in the prior art, no solution regarding how to configure a CB resource is provided. Therefore, when the UE uses the CB resource for uplink transmission, serious conflict may occur, and loss of data during uplink transmission may be caused, or delay may be caused due to retransmission.

Document EP 2 015 478 A2 discloses a random access procedure, wherein a user equipment selects a random access preamble from a set of available random access preambles, and transmits this selected random access preamble to a base station. The base station transmits a random access response including uplink radio resource allocation information, an index of the random access preamble received to identify the user equipment performing the random access procedure, and a temporary identifier of the user equipment. The user equipment transmits a scheduled message including a unique identifier of the user equipment to the base station by using the uplink radio resource allocation information. The base station transmits to the user equipment a contention resolution message including the unique identifier of the user equipment.

When a user equipment transmits the scheduled message, a contention resolution timer used for contention resolution is started. If the contention resolution timer is expired, it is determined that the contention resolution is unsuccessful. If the user equipment receives the contention resolution message including the unique identifier of the user equipment, the contention resolution timer stops, and the user equipment determines that the contention resolution is successful.

Document EP 2 136 584 A2 discloses a communication sequence between a user equipment and a e-Node B (eNB) using a RACH. The user equipment selects the RACH number at random from a RACH number table and transmits, as M1 signal, an RACH preamble notification including this RACH number to the eNB. RACH is normally completed after further M2, M3 and M4 signals. The eNB monitors the ratio of the number of connection sequences started upon reception of the M1 signal to the number of connection sequences having been normally completed in order to evaluate the presence of a congestion state in the network. If a congestion state is evaluated, the eNB broadcasts a restriction instruction signal to halt the new RACH connection sequences for the purpose of halting new transmission processing of the M1 signal of the user equipments

Document US 2009/0259910 A1 discloses a method of performing a random access procedure by a mobile terminal comprising transmitting a random access preamble to a base station, receiving a random access response from the base station, and performing an uplink transmission using an uplink grant from the base station. The uplink transmission is performed by using a maximum number of HARQ (Hybrid Automatic Repeat reQuest) transmissions.

Document "3rd Generation Partnership Project; Technical Specification Group Radio Access Network; Evolved Universal Terrestrial Radio Access (E-UTRA) Medium Access Control (MAC) protocol specification (Release 8)", 3GPP TS 36.321, V8.5.0, 23 March 2009, discloses that a user equipment may be configured by RRC with a Discontinuous Reception (DRX) functionality that controls the user equipment' PDCCH monitoring activity for the user equipment' C-RNTI, TPC-PUCCH-RNTI, TPC-PUSCH-RNTI and Semi-Persistent Scheduling C-RNTI.

Document US 2009190572 A1 discloses a method for initiating contention-based and non-contention-based access procedures in a radio access network. After time synchronization is lost between a UE and a base station new downlink packets for the UE may be received by the base station. Upon reception of the packets and before indication to the UE that new packets have been received, the base station may determine whether a reserved preamble resource of the base station is available. When a reserved preamble resource is not available, the base station generates a paging message that is transmitted to the UE. The UE generates a paging message response signal based on the paging message.

### SUMMARY OF THE INVENTION

Embodiments of the present invention provide a CB resource configuration method and apparatus, so as to reduce conflict when a UE uses a CB resource.

A CB resource configuration method provided in an embodiment of the present invention includes:
configuring, by a network device, one or more first objects, including one or any combination of a UE, a radio bearer and a UE group, to be capable of using a CB resource, where the one or more first objects belong to a proper subset of all first objects that comprises less than all first objects; and
sending, by the network device, first CB resource information, where the first CB resource information is used for indicating that the one or more first objects are capable of using the CB resource.

A CB resource using method provided in an embodiment of the present invention includes:
receiving, by a UE, first contention based CB resource information, where the first CB resource information is used for indicating that one or more first objects , including one or any combination of a UE, a radio bearer and a UE group, are capable of using a CB resource, and the one or more first objects belong to a proper subset of all first that comprises less than all first objects and using, by the UE, the CB resource according to the first CB resource information.

A network device provided in an embodiment of the present invention includes:
a first configuration module, configured to configure one or more first objects, including one or any combination of a UE, a radio bearer and a UE group, to be capable of using contention based CB resource, where the one or more first objects belong to a proper subset of all first that comprises less than all first objects; and
a sending module, configured to send first CB resource information, where the first CB resource information is used for indicating that the one or more first objects are capable of using the CB resource.

A UE provided in an embodiment of the present invention includes:
a receiving module, configured to receive first contention based CB resource information, wherein the first CB resource information is used for indicating that one or more first, including one or any combination of a UE, a radio bearer and a UE group, are capable of using a CB resource, and the one or more first objects belong to a proper subset of all first that comprises less than all first objects; and
a using module, configured to use the CB resource according to the first CB resource information received by the receiving module.

In the CB resource configuration method provided in the embodiments of the present invention, the first object is configured to be capable of using a CB resource, so that conflict during using the CB resource is reduced, and the efficiency of using the CB resource is improved. In the CB resource using method provided in this embodiment, a CB resource is used according to CB resource information, so that conflict on the CB resource is reduced, the efficiency of using the CB resource is improved, and sending efficiency is improved.

### BRIEF DESCRIPTION OF THE DRAWINGS

To illustrate technical solutions in embodiments of the present invention or in the prior art more clearly, accompanying drawings for describing the embodiments or the prior art are introduced briefly in the following. Apparently, the accompanying drawings in the following description are only some embodiments of the present invention, and persons of ordinary skill in the art can derive other drawings from these accompanying drawings without creative efforts.
FIG. 1 is a schematic flow chart of a CB resource configuration method according to an embodiment of the present invention;
FIG. 2 is a schematic flow chart of another CB resource configuration method according to an embodiment of the present invention;
FIG. 3 is a schematic flow chart of another CB resource configuration method according to an embodiment of the present invention;
FIG. 4 is a schematic flow chart of a CB resource using method according to an embodiment of the present invention;
FIG. 5 is a schematic flow chart of another CB resource using method according to an embodiment of the present invention;
FIG. 6 is a schematic structural diagram of a network device according to an embodiment of the present invention;
FIG. 7 is a schematic structural diagram of another network device according to an embodiment of the present invention;
FIG. 8 is a schematic structural diagram of another network device according to an embodiment of the present invention;
FIG. 9 is a schematic structural diagram of a UE according to an embodiment of the present invention; and
FIG. 10 is a schematic structural diagram of another UE according to an embodiment of the present invention.

### DETAILED DESCRIPTION OF THE EMBODIMENTS

The technical solutions in the embodiments of the present invention are clearly and completely described in the following with reference to the accompanying drawings. It is obvious that the embodiments to be described are only a part rather than all of the embodiments of the present invention. All other embodiments obtained by persons of ordinary skill in the art based on the embodiments of the present invention without creative efforts should fall within the protection scope of the present invention.

The following embodiments of the present invention take an LTE-A (Long Term Evolution Advance, long term evolution) system for example, but are not limited to the applications in the LTE-A system, and may also be applied in other wireless communication systems, such as an LTE system and a UMTS system.

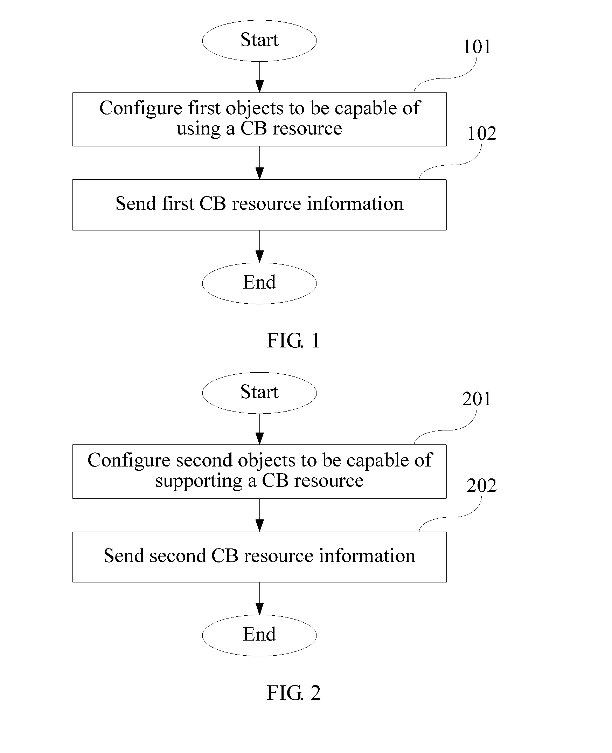

A CB resource configuration method provided in an embodiment of the present invention is described in detail below with reference to FIG. 1. The method includes:
Step 101: A network device configures one or more first objects to be capable of using a CB resource.

The network device may be, for example, an eNB, a relay station or other network entities having the same function, which will not be described again in the following embodiments. The first object may include, for example, one or any combination of the following: a UE, a UE group and a radio bearer (Radio Bearer, RB). The RB may also include a traffic RB and/or a signaling RB. The UE group may be, for example, grouped according to factors, such as capabilities of UEs or traffic features of UEs or grouped at random. In this embodiment, the one or more first objects are less than all first objects, that is, the one or more first objects belong to a proper subset of all first objects.

When the first object includes an RB, the configuring the one or more first objects to be capable of using the CB resource is: when uplink data of one or more RBs arrives, a UE is capable of using the CB resource to send the uplink data.

When the first object includes a UE, the configuring the one or more first objects to be capable of using the CB resource is: when uplink data of one or more UEs arrives, a UE is capable of using the CB resource to send the uplink data.

When the first object includes a UE group, the configuring the one or more first objects to be capable of using the CB resource is: when uplink data of UEs in one or more UE groups arrives, a UE is capable of using the CB resource to send the uplink data.

Step 102: The network device sends first CB resource information.

In this embodiment, the first CB resource information is used for indicating that the one or more first objects are capable of using the CB resource.

In this embodiment, the network device configures the one or more first objects to be capable of using the CB resource, so that conflict caused when all the first objects are capable of using the CB resource is avoided, thereby achieving higher efficiency of uplink transmission performed by using the CB resource, and higher transmission efficiency of the UE.

In this embodiment, the configuring, by the network device, the one or more first objects to be capable of using the CB resource may be implemented in different manners. For example, when all the first objects are capable of using the CB resource by default, a network side may set that a part of the first objects are incapable of using the CB resource, so as to configure one or more first objects to be capable of using the CB resource; and when all the first objects are incapable of using the CB resource by default, the network side may set that one or more first objects are capable of using the CB resource. Alternatively, the network side may set that a part of the first objects are capable of using the CB resource and at the same time set that other first objects are incapable of using the CB resource, so as to configure one or more first objects to be capable of using the CB resource.

In this embodiment, when the first object includes a UE group, the configuring, by the network device, the one or more first objects to be capable of using the CB resource may further be: configuring, by the network device, one or more UE groups to be capable of using the CB resource corresponding to the one or more UE groups. For example, the network device configures one or more UE groups to use the same CB-RNTI, and notifies the CB-RNTI to UEs in the UE group. A specific example is described below: if the network device configures one or more UE groups to use a CB-RNTI1, UEs in the one or more UE groups can only detect a CB resource masked with the CB-RNTI1. The network device configures other UE groups to use other CB-RNTIs different from the CB-RNTI1. The following description is given based on the situation that the network device configures different UE groups to use different CB-RNTIs. Since different UE groups use different CB-RNTIs, the UEs in the different UE groups can only detect CB resources masked with the CB-RNTIs used by their respective UE groups, and in this case, different UE groups can use different CB resources, thereby reducing conflict during use of the CB resources.

In this embodiment, when the first object includes an RB, the configuring, by the network device, the one or more first objects to be capable of using the CB resource may further be: configuring, by the network device, one or more RBs to be capable of actively using the CB resource. The configuring the one or more RBs to be capable of actively using the CB resource is that when uplink data of the one or more RBs arrives, the UE can use the CB resource to send the uplink date, and if the resource used by the UE to send the uplink date do not occupy all CB resources, the UE may also use a remaining CB resource to send uplink data of other RBs of the UE. By configuring one or more RBs to be capable of actively using the CB resource, traffic that has a large volume or requires frequent data scheduling and transmission is limited from using the CB resource, and meanwhile, the CB resource may also be made full use of to the maximum extent, thereby further saving the CB resource and improving the transmission efficiency of the CB resource on the basis of reducing conflict.

In this embodiment, when the first object includes an RB, notifying, by the network device, the UE of the configuration of the one or more first objects may be, for example: notifying, by the network device through one or any combination of an RRC message, an MAC (Media Access Control, media access control) layer message and a physical layer message, the UE that one or more RBs of the UE are capable of using the CB resource; or may be: notifying the UE that one or more RBs of the UE are incapable of using the CB resource; or may be: notifying the UE that one or more RBs of the UE are incapable of using the CB resource and other RBs than the one or more RBs are capable of using the CB resource. Reference may be made thereto in the following examples, and details will not be described again. The network device configures one or more RBs to be capable of using CB resource, so that traffic that has a large volume or requires frequent data scheduling and transmission is limited from using the CB resource, and conflict during the use of the CB resource is reduced, thereby further optimizing the use of the CB resource and improving the transmission efficiency of the CB resource.

In this embodiment, when the first object includes a UE, the notifying, by the network device, the UE of the configuration of the one or more first objects may be, for example: notifying, by the network device through one or any combination of an RRC message, an MAC layer message and a physical layer message, the UE that the UE is capable of using the CB resource.

In this embodiment, when the first object includes a UE group, reference may be made to the implementation performed when the first object is a UE. The network device configures one or more UEs or UE groups to be capable of using a CB resource, so that a part of UEs are incapable of using the CB resource, thereby reducing the probability of conflict during the use of the CB resource, and improving the transmission efficiency of the CB resource. Furthermore, a UE incapable of using the CB resource may not detect a CB Grant any more, thereby saving the energy of the UE and reducing implementation complexity.

In this embodiment, when the first object includes any combination of an RB, a UE and a UE group, a notification method may also be a corresponding combination of the above methods, and details will not be described again.

In this embodiment, the one or more first objects may be, for example, determined according to one or any combination of the following factors: quality of service requirements of RBs, subscription situation of UEs, configuration strategy of the network device, load of the network device, radio resource load and so on. Reference may be made thereto in the following embodiments, and details will not be described again.

In this embodiment, detecting conflict on the CB resource by the network device may be further included. Accordingly, when a conflict probability detected is greater than or equal to a second threshold, and N first objects capable of using the CB resource already exist, the configuring, by the network device, the one or more first objects to be capable of using the CB resource may be, for example, configuring, by the network device, less than N first objects to be capable of using the CB resource. The second threshold may be preset, or may be sent by a core network, or sent by another network device. The second threshold may be, for example, 30%. The network device detects conflict on the CB resource, and reduces the first objects configured to be capable of using the CB resource when the probability of the conflict is greater than the threshold, thereby reducing conflict on the CB resource, and improving the efficiency of using the CB resource. Further, when the conflict probability detected is greater than or equal to the second threshold, all the first objects may be configured to be incapable of using the CB resource.

In this embodiment, detecting, by the network device, a utilization rate of the CB resource may be further included. Accordingly, when the detected utilization rate is smaller than or equal to a fourth threshold, and M first objects capable of using the CB resource already exist, the configuring, by the network device, the one or more first objects to be capable of using the CB resource may include, for example, configuring, by the network device, more than M first objects to be capable of using the CB resource. The fourth threshold may be the same as or different from the second threshold. In addition, the fourth threshold may be set with reference to the setting of the second threshold.

In this embodiment, RBs or UEs that will involve upload of a large amount of data may be configured to be incapable of using the CB resource, and RBs or UEs frequently using the CB resource may also be configured to be incapable of using the CB resource, thereby reducing conflict on the CB resource, and improving the utilization of the CB resource.

The CB resource configuration methods provided in this embodiment and the following embodiments may be implemented in combination with a method for configuring a CB resource parameters, may be implemented in combination with a method for allocating a CB resource, and may further be implemented in combination with a method for retransmitting or sending a CB resource.

Another CB resource configuration method provided in an embodiment of the present invention is described in detail below with reference to FIG. 2. The method includes:
Step 201: A network device configures one or more second objects to be capable of supporting a CB resource.

The second object may include, for example, one or any combination of the following: a cell, a component carrier (Component Carrier, CC) and a CC group. Herein, CCs may be grouped into a CC group according to load, interference or other properties of the CCs. In this embodiment, the one or more second objects are less than all second objects, and belong to a proper subset of all second objects.

In this embodiment, the configuring, by the network device, the one or more second objects to be capable of supporting the CB resource may be implemented in different manners. For the specific implementation, reference may be made to the embodiment shown in FIG. 1.

Step 202: The network device sends second CB resource information.

In this embodiment, the second CB resource information is used for indicating that the one or more second objects are capable of supporting the CB resource.

In this embodiment, the network device configures one or more second objects to be capable of supporting the CB resource, so that a UE attempts to receive a CB resource grant (CB Grant) only when a cell to which the UE belongs supports the CB resource or a CC or CC group used by the UE supports the CB resource, thereby avoiding energy consumption caused when the UE detects the CB resource on second objects that do not supporting CB the resource, and further reducing the processing complexity of the UE.

In this embodiment, when the second object is a cell, a CC, a CC group or any combination thereof, notifying, by the network device, the UE of the configuration of the one or more second objects may be, for example: notifying, by the network device through one or any combination of a broadcast message, an RRC message, an MAC layer message and a physical layer message, the UE that the one or more second objects are capable of using the CB resource. When the second object is a CC group, reference may be made to the implementation performed when the second object is a CC, and details will not be described again in the following.

In this embodiment, detecting, by the network device, conflict on the CB resource may be further included. Correspondingly, the configuring, by the network device, the one or more second objects to be capable of supporting the CB resource may include, for example, when a conflict probability detected is greater than or equal to a first threshold, and P second objects capable of supporting the CB resource already exist, configuring, by the network device, less than P second objects to be capable of supporting the CB resource. The first threshold may be the same as or different from the second threshold and/or the fourth threshold in the embodiment shown in FIG. 1, and the method for setting the first threshold may be the same as or different from that in the embodiment shown in FIG. 1. For the specific setting method, reference may be made to the embodiment shown in FIG. 1. The network device detects conflict on the CB resource, and reduces the number of second objects configured to be capable of supporting the CB resource when the conflict probability is greater than or equal to the first threshold, so that the use of the CB resource may be limited, and conflict during the use of the CB resource is reduced. Further, when the conflict probability detected is greater than or equal to the first threshold, all the second objects may be configured to be incapable of supporting the CB resource.

In this embodiment, detecting, by the network device, a utilization rate of the CB resource may be further included. Accordingly, when the detected utilization rate is smaller than or equal to a third threshold, and Q second objects capable of supporting the CB resource already exist, the configuring, by the network device, the one or more second objects to be capable of supporting the CB resource includes: configuring, by the network device, more than Q second objects currently configured to be capable of supporting the CB resource. The third threshold may be the same as or different from the second threshold and/or the fourth threshold in the embodiment shown in FIG. 1, and the method for setting the third threshold may be the same as or different from that in the embodiment shown in FIG. 1. The third threshold may be the same as or different from the first threshold. In addition, the third threshold may be set with reference to the setting of the second threshold.

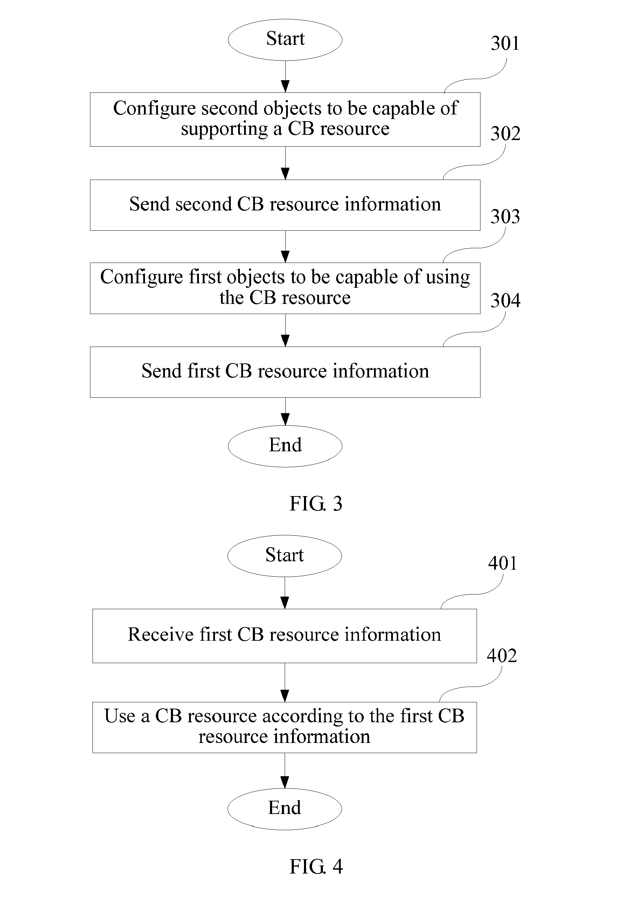

Further, the embodiments shown in FIG. 1 and FIG. 2 may be combined to obtain more embodiments. When the embodiments shown in FIG. 1 and FIG. 2 are combined, it may only be limited that the one or more first objects belong to a proper subset of all first objects, but whether the one or more second objects belong to a proper subset of all second objects is not limited; or it may only be limited that the one or more second objects belong to a proper subset of all second objects, but whether the one or more first objects belong to a proper subset of all first objects is not limited. The embodiments obtained by combining FIG. 1 and FIG. 2 are described in detail by taking an embodiment shown in FIG. 3 as an example only.

Step 301: A network device configures one or more second objects to be capable of supporting a CB resource.

For the specific implementation, reference may be made to the embodiment shown in FIG. 2.

Step 302: The network device sends second CB resource information.

For the specific implementation of the second CB resource information, reference may be made to the embodiment shown in FIG. 2.

Step 303: The network device configures one or more first objects to be capable of using the CB resource, in the second objects capable of supporting the CB resource.

For example, if a cell 1 is configured to be capable of supporting the CB resource in step 301, one or more RBs of a UE 1 in the cell 1 may be configured to be capable of using the CB resource or actively using the CB resource in step 302.

Step 304: The network device sends first CB resource information.

For the specific implementation of the first CB resource information, reference may be made to the embodiment shown in FIG. 1.

In this embodiment, no specific execution order exists between step 302 and step 303, and no specific execution order exists between step 302 and step 304. Further, step 302 and step 304 may be combined, that is, the network device sends the first CB resource information and the second CB resource information at the same time.

The following embodiments may also be applied to a relay scenario, and for convenience of description, only a UE and an eNB are taken as examples for illustration. When a sending end of uplink transmission is a UE, steps executed by a relay station may be implemented with reference to the eNB; and when the sending end of uplink transmission is a relay station, steps executed by the relay station may be implemented with reference to the UE, and details will not be described again in the following.

In the following embodiments, the embodiments applicable to a UE are all applicable to a UE group, the embodiments applicable to a CC are all applicable to a CC group, only a UE and a CC are taken as examples in the following. For the implementation of the UE group and the implementation of the CC group, reference may be made with the UE and the CC, and details will not be described again.

A CB resource using method provided in an embodiment of the present invention is described in detail below with reference to FIG. 4. The method includes:
Step 401: A UE receives first CB resource information, where the first CB resource indication information is sent by a network side.

In this embodiment, the first CB resource information may be, for example, used for indicating that one or more first objects are capable of using a CB resource.

In this embodiment, the first object includes one or any combination of the following: an RB, a UE, and a UE group.

In this embodiment, for example, when the first object is incapable of using the CB resource by default, the first CB resource information may indicate that one or more first objects are capable of using the CB resource, and at this time, the one or more first objects belong to a proper subset of all first objects.

When the first object is capable of using the CB resource by default, the first CB resource information may indicate that one or more first objects are incapable of using the CB resource, and at this time, the one or more first objects may be a proper subset or whole set of all first obj ects.

No matter whether the first object is capable or incapable of using the CB resource by default, the first CB resource information may indicate that one or more first objects are capable of using the CB resource and other first objects are incapable of using the CB resource. Reference may be made thereto in the following embodiments, and details will not be described again.

Step 402: The UE uses the CB resource according to the first CB resource information.

Through the CB resource using method provided in this embodiment, the UE may use the CB resource according to an indication of the network side, so that disorder and conflict during use of the CB resource is avoided, and the efficiency of uplink transmission is improved.

In this embodiment, for a rule of determining the one or more first objects, reference may be made to the embodiment shown in FIG. 1.

In this embodiment, if the first CB resource information indicates that the UE is capable of using the CB resource, when uplink data of the UE arrives or a BSR is triggered, the UE may use the CB resource to send the uplink data, or may use the CB resource to send a BSR to request a dedicated resource.

In this embodiment, if the first CB resource information indicates that one or more RBs of the UE are capable of using the CB resource, when uplink data on the one or more RBs arrives or a BSR is triggered, the UE may use the CB resource to upload the uplink data, or may use the CB resource to upload a BSR. The BSR may be triggered by uplink data on the RB capable of using the CB resource, or by uplink data on the RB incapable of using the CB resource, or may be triggered when other BSR triggering conditions are satisfied.

In this embodiment, if the first CB resource information indicates that the UE is incapable of using the CB resource, the UE may not detect a CB Grant any more, thereby saving the energy of the UE.

In this embodiment, if the first CB resource indication information indicates that one or more RBs of the UE are incapable of using the CB resource, when uplink data on the one or more RBs arrives, the UE is incapable of using the CB resource to upload the uplink data on the one or more RBs. Further, if the uplink data on the one or more RBs arrives and a BSR is triggered, the CB resource may be used to upload the BSR. Optionally, when the UE uses the CB resource to upload the BSR, if CB resources is not all occupied, it may be allowed to use a remaining CB resource to transmit uplink data.

In this embodiment, if the first CB resource information indicates that one or more RBs of the UE are capable of actively using the CB resource, when uplink data on the one or more RBs arrives, the UE may use the CB resource to send the uplink data, and when the uplink data does not occupy all CB resources, the UE may use a remaining CB resource to send uplink data on other RBs of the UE.

In this embodiment, the using, by the UE, the CB resource according to the first CB resource information in step 402 may further include: using, by the UE, the CB resource according to the first CB resource information and a first priority. The first priority is, for example, used for representing priority levels among data or BSRs to be sent. The first priority may be, for example, BSR>uplink data on RBs capable of actively using the CB resource>uplink data on RBs incapable of actively using the CB resource.

In this embodiment, the using, by the UE, the CB resource according to the first CB resource information in step 402 may further include: using, by the UE, the CB resource according to the first CB resource information and a second priority. The second priority may be, for example, used for representing priority levels among a plurality of RBs. The second priority is, for example, a priority determined according to logical channel priorities and/or a PBR (Prioritized Bit Rate, prioritized bit rate).

For example, when the first CB resource information indicates that a plurality of RBs of the UE is capable of using the CB resource, the UE may send, among the plurality of RBs, the uplink data on one or more RBs in the plurality of RBs sequentially on the CB resource according to the logical channel priorities and/or PBR.

For example, when the first CB resource information indicates that a plurality of RBs of the UE is capable of actively using the CB resource, the UE may send, among the plurality of RBs, the uplink data on one or more RBs in the plurality of RBs sequentially on the CB resource according to the logical channel priorities and/or PBR. If there is a remaining CB resource, the remaining uplink data on one of the plurality of RBs is sent preferentially according to the logical channel priorities and/or PBR, and the rest can be done by analogy.

In this embodiment, the UE may also use the CB resource according to the first CB resource information, the first priority and the second priority, that is, may send a BSR most preferentially, send uplink data on RBs capable of actively using the CB resource less preferentially, and send uplink data on RBs incapable of actively using the CB resource least preferentially, where priority levels among the RBs capable of actively using the CB resource are determined according to the second priority, and priority levels among the RBs incapable of actively using the CB resource are determined according to the second priority.

In this embodiment, the UE may also obtain a CB-RNTI from the network side, detect a CB resource according to the CB-RNTI notified by the network side, and use the detected CB resource.

In this embodiment, the UE receives the first CB resource information by receiving one or any combination of an RRC message, an MAC layer message and a physical layer message. Reference may be made to the embodiment shown in FIG. 1 for details.

For a UE under a DRX (discontinuous reception, Discontinuous Reception) mode, when the UE is under a sleep state, if the first CB resource information satisfies a first condition, and the UE satisfies a second condition, the UE wakes up from the sleep state and monitors a CB resource, and uses the monitored CB resource.

The first condition may include, for example, one or any combination of the following: the UE is configured to be capable of using the CB resource; a UE group to which the UE belongs is configured to be capable of using the CB resource; at least one RB of the UE is configured to be capable of using the CB resource; and at least one RB of the UE is configured to be capable of actively using the CB resource.

If the first condition includes that the UE is configured to be capable of using the CB resource, and/or the UE group to which the UE belongs is configured to be capable of using the CB resource, the second condition includes that: uplink data of the UE arrives and/or a BSR is triggered.

If the first condition includes that at least one RB of the UE is configured to be capable of using the CB resource, and/or at least one RB of the UE is configured to be capable of actively using the CB resource, the second condition includes that: uplink data of at least one RB arrives or a BSR is triggered.

After monitoring the CB resource, the UE may use the CB resource with reference to the above method.

In this embodiment, if what is sent by the UE on the CB resource includes a BSR, the UE keeps in an active state for a period of time after sending the BSR, so as to wait for a dedicated resource allocated by the network side. The keeping in the active state for a period of time may be implemented by setting a timer. The timer may be set to time from zero to set time, or may be set to time from the set time to zero. After the BSR is sent, the timer is started, and before timing is finished, the UE may keep in the active state all the time. If the timer is timing when the BSR is sent, the timer may be restarted. After the timer finishes timing, the UE may re-enter the sleep state. Further, after the BSR is sent and an ACK of the network side is received, the timer may also be started. When the ACK is received, if the timer is timing, the timer is restarted. If the UE sends the BSR and receives a NACK, the UE then enters the sleep state. That is, the UE does not start the timer any more, and enters the sleep state.

In this embodiment, the network side feeds back correct reception with an ACK, and the network side feeds back incorrect reception with a NACK, but the present invention is not limited to the ACK and the NACK, and other manners representing correct reception or incorrect reception of the network side may also be used.

Through the CB resource using method provided in this embodiment, a first object capable of using the CB resource or capable of actively using the CB resource can be obtained by receiving the first CB resource information, so that the CB resource can be used more reasonably, thereby avoiding conflict on the CB resource. Further, through setting of priorities, RBs using the CB resource can be arranged more reasonably, thereby improving the transmission efficiency of the UE.

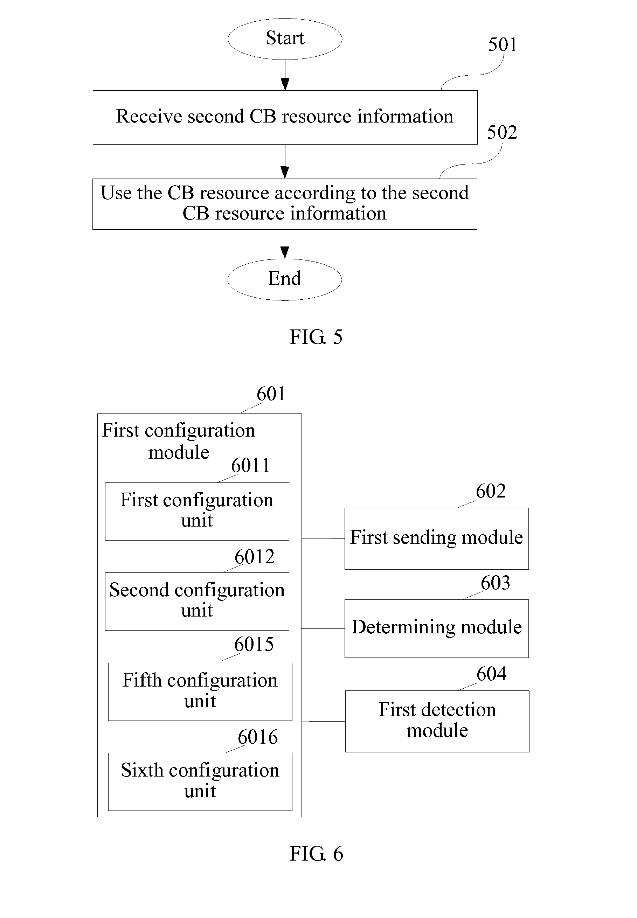

Another CB resource using method provided in an embodiment of the present invention is described in detail below with reference to FIG. 5. The method includes the following steps.

Step 501: A UE receives second CB resource information, where the second CB resource information is sent by a network device.

In this embodiment, the second CB resource information may be, for example, used for indicating that one or more second objects are capable of supporting a CB resource.

In this embodiment, the second object includes one or any combination of the following: a cell, a CC, and a CC group.

Step 502: The UE uses the CB resource according the second CB resource information.

Through the method provided in the embodiment of the present invention, the UE can use the CB resource more flexibly and more efficiently, and the energy of the UE can also be saved.

In this embodiment, when the second CB resource information indicates that one or more cells do not support (or in other words, are not allocated) CB resource, if a UE belongs to the one or more cells, the UE is incapable of using the CB resource for uplink transmission, and does not need to blindly detect the CB resource. On the contrary, when the second CB resource indication information indicates that one or more cells support the CB resource, and a UE belongs to the one or more cells, the UE is capable of using the CB resource to send uplink data or send a BSR.

In this embodiment, when the second CB resource information indicates that one or more CCs do not support (or in other words, are not allocated) the CB resource, if the one or more CCs are allocated to a UE, the UE is incapable of using the CB resource on the one or more CCs. On the contrary, when the second CB resource information indicates that one or more CCs support the CB resource, if the one or more CCs are allocated to a UE, the UE is capable of using the CB resource on the one or more CCs to send uplink data or send a BSR.

In this embodiment, further, step 502 may also be, for example, using, by the UE, the CB resource according to the second CB resource information and a third priority. The third priority may be, for example, used for representing priorities among a plurality of CCs or a plurality of CC groups. The third priority may be, for example, determined through random selection or determined according to one or any combination of channel quality, load, and transmit power.

For example, when the second CB resource information indicates that a plurality of CCs is capable of supporting the CB resource, the UE may select CB resource of at least one CC in the plurality of CCs for uplink transmission. The UE may select at least one CC through random selection or according to a certain rule. The rule may be, for example, preferentially selecting one with highest channel quality, one with lightest load, or one with lowest transmit power required, or other rules.

The embodiments shown in FIG. 4 and FIG. 5 may be combined to obtain more embodiments. In the embodiments obtained through combination, the UE may use the CB resource according to the first CB resource information, the second CB resource information and each priority at the same time.

A network device provided in an embodiment of the present invention is described in detail below with reference to FIG. 6. The network device may be, for example, an eNB, a relay station or another functional entity having the same function.

The network device includes: a first configuration module 601, configured to configure that one or more first objects are capable of using a CB resource; and a first sending module 602, configured to send first CB resource information, where the first CB resource information is used for indicating that the one or more first objects configured by the first configuration module 601 are capable of using the CB resource. For the first object, reference may be made to the embodiment shown in FIG. 1 for details.

In this embodiment, for the specific implementation of the first configuration module 601, reference may be made to the configuration method in the embodiment shown in FIG. 1.

In this embodiment, the first configuration module 601 may include, for example, a sixth configuration unit 6016, configured to, when the first object is a UE group, configure that one or more UE groups are capable of using the CB resource corresponding to the one or more UE groups. For the specific implementation of the sixth configuration unit 6016, reference may be made to the configuration method in the embodiment shown in FIG. 1.

In this embodiment, the first configuration module 601 may include, for example, a fifth configuration unit 6015, configured to configure that one or more RBs are capable of actively using the CB resource. For the specific implementation of the fifth configuration unit 6015, reference may be made to the configuration method in the embodiment shown in FIG. 1.

In this embodiment, the first sending module 602 may, for example, notify the configuration performed by the first configuration module 601 to a UE through one or any combination of an RRC message, an MAC layer message and a physical layer message.

In this embodiment, the network device may further include a determining module 603, configured to determine the one or more first objects according to any one or any combination of the following factors: quality of service requirements of RBs, subscription situation of UEs, local configuration strategy, local load, and radio resource load, and notify the determined one or more first objects to the first configuration module 601. In this way, the first configuration module 601 may perform configuration according to the one or more first objects determined by the determining module 603.

In this embodiment, the network device may further include a first detection module 604, configured to detect conflict on the CB resource and/or a utilization rate of the CB resource. The first configuration module 601 may include, for example, a first configuration unit 6011, configured to, when a conflict probability detected by the first detection module 604 is greater than or equal to a second threshold and N first objects capable of using the CB resource already exist, configure less than N first objects to be capable of using the CB resource; and/or a second configuration unit 6012, configured to, when the utilization rate detected by the first detection module 604 is smaller than or equal to a fourth threshold and M first objects capable of using the CB resource already exist, configure more than M first objects to be capable of using the CB resource. For the specific content and setting manner of each threshold, reference may be made to the embodiment shown in FIG. 1.

The network device provided in this embodiment may be, for example, configured to execute the CB resource configuration method provided in the embodiment shown in FIG. 1.

The network device provided in this embodiment can limit the use of the CB resource for first objects, thereby reducing conflicts during the use of the CB resource and improving the efficiency of using the CB resource.

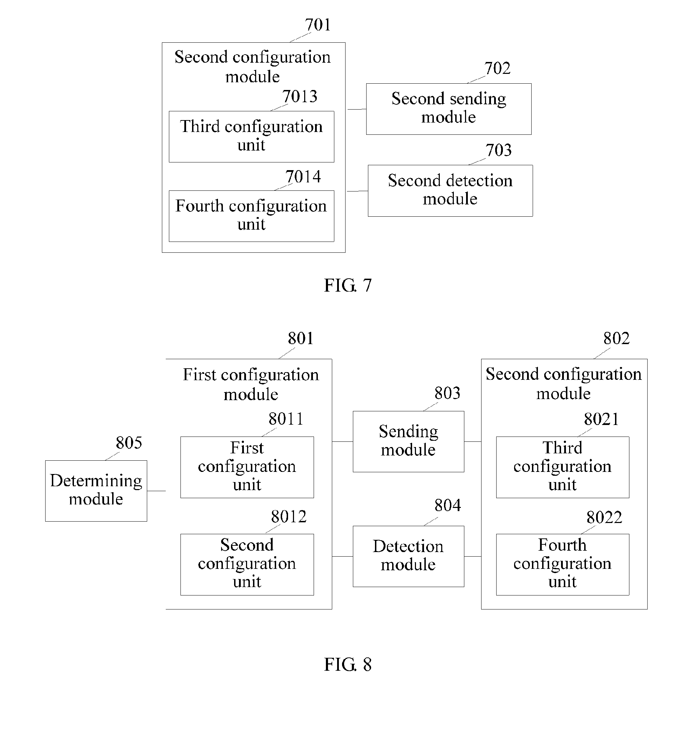

Another network device provided in an embodiment of the present invention is described in detail below with reference to FIG. 7. The network device may be, for example, an eNB, a relay station or another functional entity having the same function.

The network device includes: a second configuration module 701, configured to configure that one or more second objects are capable of supporting a CB resource; and a second sending module 702, configured to send second CB resource information. For the specific content and notification method of the second CB resource information, reference may be made to the embodiment shown in FIG. 2.

In this embodiment, the second sending module 702 may, for example, notify the configuration performed by the second configuration module 702 to the UE through one or any combination of a broadcast message, an RRC message, an MAC layer message and a physical layer message.

In this embodiment, the network device may further include a second detection module 703, configured to detect conflict on the CB resource and/or a utilization rate of the CB resource. The second configuration module 701 may include, for example, a third configuration unit 7013, configured to, when a conflict probability detected by the second detection module 703 is greater than or equal to a first threshold and P second objects capable of supporting the CB resource already exist, configure less than P second objects to be capable of supporting the CB resource; and/or a fourth configuration unit 7014, configured to, when the utilization rate detected by the second detection module 703 is smaller than or equal to a third threshold and Q second objects capable of supporting the CB resource already exist, configure more than Q second objects to be capable of supporting the CB resource.

The network device provided in this embodiment can limit the use of the CB resource, so that conflict during the use of the CB resource is reduced, and energy consumption caused when the UE detects the CB resource on second objects that do not support the CB resource may be avoided.

In this embodiment, the thresholds may be the same as or different from the thresholds in the embodiment shown in FIG. 6, and for specific implementation and setting, reference may be made to the embodiment shown in FIG. 2.

The network device provided in this embodiment may be, for example, configured to execute the CB resource configuration method provided in the embodiment shown in FIG. 2.

Further, the embodiments shown in FIG. 6 and FIG. 7 may be combined. One of embodiments obtained through combination is described below by only taking an embodiment shown in FIG. 8 as an example. As shown in FIG. 8, a network device includes a first configuration module 801, a second configuration module 802, and a sending module 803. The first configuration module 801 is configured to configure that one or more first objects are capable of using a contention based CB resource. The second configuration module 802 is configured to configure that one or more second objects are capable of supporting the CB resource. The sending module 803 is configured to send first CB resource information and/or second CB resource information.

In this embodiment, the network device may further include a detection module 804, configured to detect conflict on the CB resource and/or a utilization rate of the CB resource.

The first configuration module 801 may include, for example, a first configuration unit 8011, configured to, when a conflict probability detected by the detection module 804 is greater than or equal to a second threshold and N first objects capable of using the CB resource already exist, configure that less than N first objects are capable of using the CB resource; and/or a second configuration unit 8012, configured to, when the utilization rate detected by the detection module 804 is smaller than or equal to a fourth threshold and M first objects capable of using the CB resource already exist, configure that more than M first objects are capable of using the CB resource.

The second configuration module 802 may include, for example, a third configuration unit 8021, configured to, when a conflict probability detected by the detection module 804 is greater than or equal to a first threshold and P second objects capable of supporting the CB resource already exist, configure that less than P second objects are capable of supporting the CB resource; and/or a fourth configuration unit, configured to, when the utilization rate detected by the detection module 804 is smaller than or equal to a third threshold and Q second objects capable of supporting the CB resource already exist, configure that more than Q second objects are capable of supporting the CB resource. For the setting and specific content of each threshold, reference may be made to the embodiments shown in FIG. 1 and FIG. 2.

In this embodiment, the network device may further include a determining module 805, configured to determine the one or more first objects according to any one or any combination of the following factors: quality of service requirements of RBs, subscription situation of UEs, local configuration strategy, local load, and radio resource load, and notify the determined one or more first objects to the first configuration module 801.

The network device provided in this embodiment can reduce conflict during the use of the CB resource, improve the efficiency of using the CB resource, and reduce the energy consumption of the UE.

The network device provided in this embodiment may be, for example, configured to execute the CB resource configuration method provided in the embodiment shown in FIG. 3.

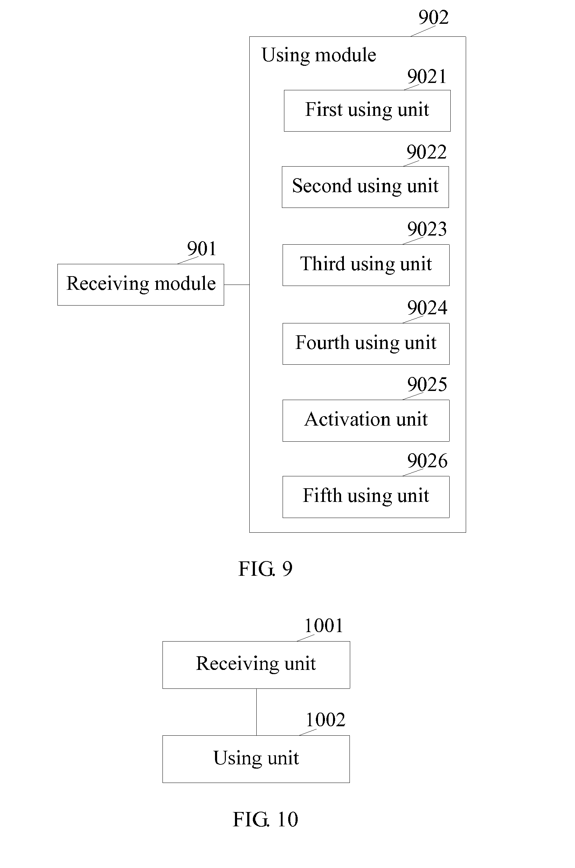

A UE provided in an embodiment of the present invention is described in detail below with reference to FIG. 9. This embodiment and the following embodiment may also be applied to a relay node, that is, a relay node may also be implemented according to the structure of this embodiment or the following embodiment.

The UE includes: a receiving module 901, configured to receive first CB resource information, where the first CB resource information is used for indicating that one or more first objects are capable of using a CB resource; and a using module 902, configured to use the CB resource according to the first CB resource information received by the receiving module 901.

In this embodiment, when the first CB resource information received by the receiving module 901 indicates that one or more RBs of the UE are capable of actively using the CB resource, the using module 902 may include, for example, a first using unit 9021, configured to, when uplink data on the one or more RBs arrives, use the CB resource to send the uplink data. When the uplink data does not occupy all CB resources, a remaining CB resource may be used to send uplink data on other RBs of the UE.

In this embodiment, the using module 902 may include, for example, a second using unit 9022, configured to use the CB resource according to the first CB resource information and a first priority. The using module 902 may further include, for example, a third using unit 9023, configured to use the CB resource according to the first CB resource information and a second priority. The using module 903 may further include, for example, a fourth using unit 9024, configured to use the CB resource according to the first CB resource information, the first priority and the second priority. For the first priority and the second priority, reference may be made to the embodiment shown in FIG. 4 for details.

The UE provided in this embodiment can obtain, according to the first CB resource information, the first objects capable of using the CB resource or capable of actively using the CB resource, so that the CB resource can be used more reasonably, thereby reducing conflict on the CB resource. Further, through the setting of priorities, RBs using the CB resource can be arranged more reasonably, thereby improving the transmission efficiency of the UE.

In this embodiment, the using module 902 may further include an activation unit 9025, configured to, when the first CB resource information received by the receiving module 901 satisfies a first condition and the UE satisfies a second condition, activate the UE from a sleep state under a DRX mode, and inform a fifth using unit 9026; and the fifth using unit 9026, configured to monitor a CB resource, and use the monitored CB resource. For the first condition and the second condition, reference may be made to the embodiment shown in FIG. 4 for details.

The UE provided in this embodiment may be, for example, configured to execute the CB resource using method provided in the embodiment shown in FIG. 4.

Another UE provided in an embodiment of the present invention is described in detail below with reference to FIG. 10. This embodiment may also be applied to a relay station.

The UE includes: a receiving module 1001, configured to receive second CB resource information, where the second CB resource information is used for indicating whether one or more second obj ects are capable of supporting a CB resource.

The UE further includes: a using module 1002, configured to use the CB resource according to the second CB resource information received by the receiving module 1001.

Further, the using module 1002 may be configured to use the CB resource according to the second CB resource information received by the receiving module 1001 and a third priority. For the third priority, reference may be made to the embodiment shown in FIG. 5.

Through the method provided in the embodiment of the present invention, the UE can use the CB resource more flexibly and more efficiently, and the energy of the UE can also be saved.

Further, the embodiments shown in FIG. 9 and FIG. 10 may be combined to obtain more embodiments.

Finally, it should be noted that, persons of ordinary skill in the art can understand that all or part of the steps in each method according to the embodiments of the present invention may be implemented by a program instructing relevant hardware, and the program may be stored in a computer readable storage medium. When the program is run, steps of each method according to the embodiments of the present invention are performed. The storage medium may be a magnetic disk, an optical disk, a read-only memory (ROM), a random access memory (RAM), and so on.

The functional units in the embodiments of the present invention may be integrated in a processing module, or may also exist as separate physical units; or, two or more of the units may be integrated in one module. The integrated modules may be implemented in a form of hardware or be implemented in a form of software functional modules. If implemented in the form of software functional modules and sold or used as an independent product, the integrated modules may also be stored in a computer readable storage medium. The storage medium may be a read-only memory, a magnetic disk, an optical disk or the like.

The above specific embodiments are not intended to limit the present invention, and for persons with ordinary skill in the art, any modification, equivalent replacement, or improvement made without departing from the principle of the present invention should fall within the protection scope of the present invention.

## Claims

1. A contention based resource configuration method by a network device, comprising:
configuring, by the network device, one or more first objects including one or any combination of a UE, a radio bearer and a UE group, to be capable of using a contention based, CB, resource, wherein the one or more first objects belong to a proper subset of all first objects that comprises less than all first objects; and
sending, by the network device, first CB resource information, wherein the first CB resource information is used for indicating that the one or more first objects are capable of using the CB resource.

2. The method according to claim 1, further comprising: detecting, by the network device, conflict on the CB resource; wherein the configuring, by the network device, the one or more first objects to be capable of using the CB resource comprises:
when a conflict probability detected is greater than or equal to a second threshold, and N first objects capable of using the CB resource already exist, configuring, by the network device, less than N first objects to be capable of using the CB resource.

3. The method according to claim 1, further comprising: detecting, by the network device, a utilization rate of the CB resource; wherein
the configuring, by the network device, the one or more first objects to be capable of using the CB resource comprises:
when the detected utilization rate is smaller than or equal to a fourth threshold, and M first objects capable of using the CB resource already exist, configuring, by the network device, more than M first objects to be capable of using the CB resource.

4. The method according to claim 1, further comprising: configuring, by the network device, one or more second objects to be capable of supporting the CB resource, and sending, by the network device, second CB resource information, wherein the second CB resource information is used for indicating that the one or more second objects are capable of supporting the CB resource;
wherein the configuring, by the network device, the one or more first objects to be capable of using the CB resource comprises: configuring, by the network device, the one or more first objects to be capable of using the CB resource, in the one or more second objects.

5. The method according to claim 4, further comprising: detecting, by the network device, conflict on the CB resource; wherein
the configuring, by the network device, the one or more second objects to be capable of supporting the CB resource comprises:
when a conflict probability detected is greater than or equal to a first threshold, and P second obj ects capable of supporting the CB resource already exist, configuring, by the network device, less than P second objects to be capable of supporting the CB resource.

6. The method according to claim 4, further comprising: detecting, by the network device, a utilization rate of the CB resource; wherein
the configuring, by the network device, the one or more second objects to be capable of supporting the CB resource comprises:
when the detected utilization rate is smaller than or equal to a third threshold, and Q second objects capable of supporting the CB resource already exist, configuring, by the network device, more than Q second objects to be capable of supporting the CB resource.

7. A contention based resource using method by a user equipment, UE, comprising:
receiving, by the user equipment, UE, first contention based, CB, resource information, wherein the first CB resource information is used for indicating that one or more first objects including one or any combination of a UE, a radio bearer and a UE group, are capable of using a CB resource, and the one or more first objects belong to a proper subset of all first objects that comprises less than all first objects, and
using, by the UE, the CB resource according to the first CB resource information.

8. The method according to claim 7, further comprising:
receiving, by the UE, second CB resource information, wherein the second CB resource information is used for indicating that one or more second objects are capable of supporting the CB resource; wherein
the using, by the UE, the CB resource according to the first CB resource information comprises: using, by the UE, the CB resource according to the first CB resource information and the second CB resource information.

9. The method according to claim 7, wherein when the UE is in discontinuous reception, DRX, mode, the using, by the UE, the CB resource according to the first CB resource information comprises:
when the first CB resource information satisfies a first condition, and the UE satisfies a second condition, the UE waking up from a sleep state and monitoring the CB resource, and using the monitored CB resource;
wherein the first condition comprises one or any combination of the following: the UE is configured to be capable of using the CB resource; a UE group to which the UE belongs is configured to be capable of using the CB resource; at least one radio bearer, RB, of the UE is configured to be capable of using the CB resource; and at least one RB of the UE is configured to be capable of actively using the CB resource; and
the second condition comprises one or any combination of the following: uplink data of the UE arrives, a buffer status report, BSR, is triggered, uplink data of the at least one RB of the UE arrives, and a BSR is triggered.

10. A network device, comprising:
a first configuration module, configured to configure that one or more first objects, including one or any combination of a UE, a radio bearer and a UE group, are capable of using a contention based, CB, resource, wherein the one or more first objects belong to a proper subset of all first objects that comprises less than all first objects; and
a sending module, configured to send first CB resource information, wherein the first CB resource information is used for indicating that the one or more first objects are capable of using the CB resource.

11. The network device according to claim 10, further comprising: a detection module, configured to detect conflict on the CB resource or a utilization rate of the CB resource; wherein
the first configuration module comprises:
a first configuration unit, configured to, when a conflict probability detected by the detection module is greater than or equal to a second threshold, and N first objects capable of using the CB resource already exist, configure that less than N first objects are capable of using the CB resource; or
a second configuration unit, configured to, when the utilization rate detected by the detection module is smaller than or equal to a fourth threshold, and M first objects capable of using the CB resource already exist, configure that more than M first obj ects are capable of using the CB resource.

12. The network device according to claim 10, further comprising: a second configuration module, configured to configure that one or more second objects are capable of supporting the CB resource; wherein
the sending module is further configured to send second CB resource information, wherein the second CB resource information is used for indicating that the one or more second objects are capable of supporting the CB resource.

13. The network device according to claim 12, further comprising: a detection module, configured to detect conflict on the CB resource or a utilization rate of the CB resource; wherein
the second configuration module comprises:
a third configuration unit, configured to, when a conflict probability detected by the detection module is greater than or equal to a first threshold, and P second objects capable of supporting the CB resource already exist, configure that less than P second obj ects are capable of supporting the CB resource; or
a fourth configuration unit, configured to, when the utilization rate detected by the detection module is smaller than or equal to a third threshold, and Q second objects capable of supporting the CB resource already exist, configure that more than Q second objects are capable of supporting the CB resource.

14. A user equipment, UE, comprising:
a receiving module, configured to receive first contention based, CB, resource information, wherein the first CB resource information is used for indicating that one or more first objects, including one or any combination of a UE, a radio bearer and a UE group, are capable of using a CB resource, and the one or more first objects belong to a proper subset of all first objects that comprises less than all first objects, and
a using module, configured to use the CB resource according to the first CB resource information received by the receiving module.

15. The UE according to claim 14, wherein
the receiving module is further configured to receive second CB resource information, wherein the second CB resource information is used for indicating that one or more second objects are capable of supporting the CB resource; and
the using module is configured to use the CB resource according to the first CB resource information and the second CB resource information received by the receiving module.

## Patentansprüche

1. Konkurrenzbasiertes Betriebsmittelkonfigurationsverfahren durch eine Netzvorrichtung, das Folgendes umfasst:
Konfigurieren durch die Netzvorrichtung eines oder mehrerer erster Objekte, die eines aus oder eine Kombination aus einem UE, einem Funkträger und einer UE-Gruppe enthalten, so dass sie ein konkurrenzbasiertes Betriebsmittel (contention based resource, CB-Betriebsmittel) verwenden können, wobei das eine oder die mehreren ersten Objekte zu einer echten Untermenge aller ersten Objekte, die weniger als alle ersten Objekte umfasst, gehören; und
Senden erster CB-Betriebsmittelinformationen durch die Netzvorrichtung, wobei die ersten CB-Betriebsmittelinformationen zum Angeben verwendet werden, dass das eine oder die mehreren ersten Objekte das CB-Betriebsmittel verwenden können.

2. Verfahren nach Anspruch 1, das ferner Folgendes umfasst: Detektieren durch die Netzvorrichtung eines Konflikt auf dem CB-Betriebsmittel; wobei das Konfigurieren durch die Netzvorrichtung des einen oder der mehreren ersten Objekte, so dass sie das CB-Betriebsmittel verwenden können, Folgendes umfasst:
wenn eine detektierte Konfliktwahrscheinlichkeit größer als ein oder gleich einem zweiten Schwellenwert ist und bereits N erste Objekte, die das CB-Betriebsmittel verwenden können, vorhanden sind, Konfigurieren durch die Netzvorrichtung weniger als N erster Objekte, so dass sie das CB-Betriebsmittel verwenden können.

3. Verfahren nach Anspruch 1, das ferner Folgendes umfasst: Detektieren durch die Netzvorrichtung einer Nutzungsrate des CB-Betriebsmittels; wobei das Konfigurieren durch die Netzvorrichtung des einen oder der mehreren ersten Objekte, so dass sie das CB-Betriebsmittel verwenden können, Folgendes umfasst:
wenn die detektierte Nutzungsrate kleiner als ein oder gleich einem vierten Schwellenwert ist und bereits M erste Objekte, die das CB-Betriebsmittel verwenden können, vorhanden sind, Konfigurieren durch die Netzvorrichtung mehr als M erster Objekte, so dass sie das CB-Betriebsmittel verwenden können.

4. Verfahren nach Anspruch 1, das ferner Folgendes umfasst: Konfigurieren durch die Netzvorrichtung eines oder mehrerer zweiter Objekte, so dass sie das CB-Betriebsmittel unterstützen können, und Senden durch die Netzvorrichtung zweiter CB-Betriebsmittelinformationen, wobei die zweiten CB-Betriebsmittelinformationen verwendet werden zum Angeben, dass das eine oder die mehreren zweiten Objekte das CB-Betriebsmittel unterstützen können;
wobei das Konfigurieren durch die Netzvorrichtung des einen oder der mehreren ersten Objekte, so dass sie das CB-Betriebsmittel verwenden können, Folgendes umfasst: Konfigurieren durch die Netzvorrichtung des einen oder der mehreren ersten Objekte, so dass sie das CB-Betriebsmittel verwenden können, in dem einen oder den mehreren zweiten Objekten.

5. Verfahren nach Anspruch 4, das ferner Folgendes umfasst: Detektieren durch die Netzvorrichtung eines Konflikts auf dem CB-Betriebsmittel; wobei das Konfigurieren durch die Netzvorrichtung des einen oder der mehreren zweiten Objekte, so dass sie das CB-Betriebsmittel unterstützen können, Folgendes umfasst:
wenn eine detektierte Konfliktwahrscheinlichkeit größer als ein oder gleich einem ersten Schwellenwert ist und bereits P zweite Objekte, die das CB-Betriebsmittel unterstützen können, vorhanden sind, Konfigurieren durch die Netzvorrichtung weniger als P zweiter Objekte, so dass sie das CB-Betriebsmittel unterstützen können.

6. Verfahren nach Anspruch 4, das ferner Folgendes umfasst: Detektieren durch die Netzvorrichtung einer Verwendungsrate des CB-Betriebsmittels; wobei das Konfigurieren durch die Netzvorrichtung des einen oder der mehreren zweiten Objekte, so dass sie das CB-Betriebsmittel unterstützen können, Folgendes umfasst:
wenn die detektierte Nutzungsrate kleiner als ein oder gleich einem dritten Schwellenwert ist und bereits Q zweite Objekte, die das CB-Betriebsmittel unterstützen können, vorhanden sind, Konfigurieren durch die Netzvorrichtung mehr als Q zweiter Objekte, so dass sie das CB-Betriebsmittel unterstützen können.

7. Konkurrenzbasiertes Betriebsmittelverwendungsverfahren durch ein Anwendergerät (user equipment, UE), das Folgendes umfasst:
Empfangen durch das Anwendergerät, UE, erster konkurrenzbasierter Betriebsmittelinformationen, CB-Betriebsmittelinformationen, wobei die ersten CB-Betriebsmittelinformationen zum Angeben verwendet werden, dass ein oder mehrere erste Objekte, die eines aus oder eine Kombination aus einem UE, einem Funkträger und einer UE-Gruppe enthalten, ein CB-Betriebsmittel verwenden können, und das eine oder die mehreren ersten Objekte zu einer echten Untermenge aller ersten Objekte gehören, die weniger als alle ersten Objekte umfasst, und
Verwenden durch das UE des CB-Betriebsmittels gemäß den ersten CB-Betriebsmittelinformationen.

8. Verfahren nach Anspruch 7, das ferner Folgendes umfasst:
Empfangen durch das UE zweiter CB-Betriebsmittelinformationen, wobei die zweiten CB-Betriebsmittelinformationen verwendet werden zum Angeben, dass eines oder mehrere zweite Objekte das CB-Betriebsmittel unterstützen können; wobei
das Verwenden durch das UE des CB-Betriebsmittels gemäß den ersten CB-Betriebsmittelinformationen Folgendes umfasst: Verwenden des CB-Betriebsmittels durch das UE gemäß den ersten CB-Betriebsmittelinformationen und den zweiten CB-Betriebsmittelinformationen.

9. Verfahren nach Anspruch 7, wobei, wenn das UE sich in diskontinuierlicher Empfangsbetriebsart, DRX-Betriebsart, befindet, das Verwenden durch das UE des CB-Betriebsmittels gemäß den ersten CB-Betriebsmittelinformationen Folgendes umfasst:
wenn die ersten CB-Betriebsmittelinformationen eine erste Bedingung erfüllen und das UE eine zweite Bedingung erfüllt, wacht das UE aus einem Schlafzustand auf und überwacht das CB-Betriebsmittel und verwendet das überwachte CB-Betriebsmittel;
wobei die erste Bedingung eines aus oder eine Kombination aus dem Folgenden umfasst: das UE ist konfiguriert, so dass es das CB-Betriebsmittel verwenden kann; eine UE-Gruppe, zu der das UE gehört, ist konfiguriert, so dass sie das CB-Betriebsmittel verwenden kann; wenigstens ein Funkträger, RB, des UE ist konfiguriert, so dass er das CB-Betriebsmittel verwenden kann; und wenigstens ein RB des UE ist konfiguriert, so dass er das CB-Betriebsmittel aktiv verwenden kann; und
die zweite Bedingung eines aus oder eine Kombination aus dem Folgenden umfasst: Aufwärtsstreckendaten des UE kommen an, ein Pufferstatusbericht, BSR, wird ausgelöst, Aufwärtsstreckendaten des wenigstens einen RB des UE kommen an und ein BSR wird ausgelöst.

10. Netzvorrichtung, die Folgendes umfasst:
ein erstes Konfigurationsmodul, das konfiguriert ist zu konfigurieren, dass eines oder mehrere erste Objekte, die eines aus oder eine Kombination aus einem UE, einem Funkträger und einer UE-Gruppe enthalten, ein konkurrenzbasiertes Betriebsmittel, CB-Betriebsmittel, verwenden können, wobei das eine oder die mehreren ersten Objekte zu einer echten Untermenge aller ersten Objekte gehören, die weniger als alle ersten Objekte umfasst; und
ein Sendemodul, das konfiguriert ist, erste CB-Betriebsmittelinformationen zu senden, wobei die ersten CB-Betriebsmittelinformationen zum Angeben verwendet werden, dass das eine oder die mehreren ersten Objekte das CB-Betriebsmittel verwenden können.

11. Netzvorrichtung nach Anspruch 10, die ferner Folgendes umfasst: ein Detektionsmodul das konfiguriert ist, einen Konflikt auf dem CB-Betriebsmittel oder eine Nutzungsrate des CB-Betriebsmittels zu detektieren; wobei das erste Konfigurationsmodul Folgendes umfasst:
eine erste Konfigurationseinheit, die konfiguriert ist, wenn eine Konfliktwahrscheinlichkeit, die durch das Detektionsmodul detektiert ist, größer als oder gleich einem zweiten Schwellenwert ist, und bereits N erste Objekte, die das CB-Betriebsmittel verwenden können, vorhanden sind, zu konfigurieren, dass weniger als N erste Objekte das CB-Betriebsmittel verwenden können; oder
eine zweite Konfigurationseinheit, die konfiguriert ist, wenn die Nutzungsrate, die durch das Detektionsmodul detektiert ist, kleiner als oder gleich einem vierten Schwellenwert ist, und bereits M erste Objekte, die das CB-Betriebsmittel verwenden können, vorhanden sind, zu konfigurieren, dass mehr als M erste Objekte das CB-Betriebsmittel verwenden können.

12. Netzvorrichtung nach Anspruch 10, die ferner Folgendes umfasst: ein zweites Konfigurationsmodul, das konfiguriert ist zu konfigurieren, dass ein oder mehrere zweite Objekte das CB-Betriebsmittel unterstützen können; wobei das Sendemodul ferner konfiguriert ist, zweite CB-Betriebsmittelinformationen zu senden, wobei die zweiten CB-Betriebsmittelinformationen verwendet werden zum Angeben, dass eines oder mehrere zweite Objekte das CB-Betriebsmittel unterstützen können.

13. Netzvorrichtung nach Anspruch 12, die ferner Folgendes umfasst: ein Detektionsmodul das konfiguriert ist, einen Konflikt auf dem CB-Betriebsmittel oder eine Nutzungsrate des CB-Betriebsmittels zu detektieren; wobei das zweite Konfigurationsmodul Folgendes umfasst:
eine dritte Konfigurationseinheit, die konfiguriert ist, wenn eine Konfliktwahrscheinlichkeit, die durch das Detektionsmodul detektiert ist, größer als oder gleich einem ersten Schwellenwert ist, und bereits P zweite Objekte, die das CB-Betriebsmittel unterstützen können, vorhanden sind, zu konfigurieren, dass weniger als P erste Objekte das CB-Betriebsmittel unterstützen können; oder
eine vierte Konfigurationseinheit, die konfiguriert ist, wenn die Nutzungsrate, die durch das Detektionsmodul detektiert ist, kleiner als oder gleich einem dritten Schwellenwert ist, und bereits Q zweite Objekte, die das CB-Betriebsmittel unterstützen können, vorhanden sind, zu konfigurieren, dass mehr als Q zweite Objekte das CB-Betriebsmittel unterstützen können.

14. Anwendergerät, UE, das Folgendes umfasst:
ein Empfangsmodul, das konfiguriert ist, erste konkurrenzbasierte Betriebsmittelinformationen, CB-Betriebsmittelinformationen, zu empfangen, wobei die ersten CB-Betriebsmittelinformationen verwendet werden zum Angeben, dass ein oder mehrere erste Objekte, die eines aus oder eine Kombination aus einem UE, einem Funkträger und einer UE-Gruppe enthalten, ein CB-Betriebsmittel verwenden können, und das eine oder die mehreren ersten Objekte zu einer echten Untermenge aller ersten Objekte gehören, die weniger als alle ersten Objekte umfasst, und
ein Verwendungsmodul, das konfiguriert ist, das CB-Betriebsmittel gemäß den ersten CB-Betriebsmittelinformationen, die durch das Empfangsmodul empfangen werden, zu verwenden.

15. UE nach Anspruch 14, wobei
das Empfangsmodul ferner konfiguriert ist, zweite CB-Betriebsmittelinformationen zu empfangen, wobei die zweiten CB-Betriebsmittelinformationen verwendet werden zum Angeben, dass eines oder mehrere zweite Objekte das CB-Betriebsmittel unterstützen können; und
das Verwendungsmodul konfiguriert ist, das CB-Betriebsmittel gemäß den ersten CB-Betriebsmittelinformationen und den zweiten CB-Betriebsmittelinformationen, die durch das Empfangsmodul empfangen werden, zu verwenden.

## Revendications

1. Procédé de configuration de ressources à base de conflit par un dispositif de réseau, comprenant :
la configuration, par le dispositif de réseau, d'un ou plusieurs premiers objets comprenant l'un ou une combinaison quelconque d'un UE (User Equipment, Equipement d'Utilisateur), d'un support radio et d'un groupe d'UE, afin qu'ils soient capables d'utiliser une ressource à base de conflit, CB (Contention Based), lesdits un ou plusieurs premiers objets appartenant à un sous-ensemble de tous les premiers objets qui comprend moins de la totalité des premiers objets ; et
l'envoi, par le dispositif de réseau, de premières informations de ressources CB, les premières informations de ressources CB étant utilisées pour indiquer que lesdits un ou plusieurs premiers objets sont capables d'utiliser la ressource CB.

2. Procédé selon la revendication 1, comprenant en outre : la détection, par le dispositif de réseau, d'un conflit sur la ressource CB ; dans lequel
la configuration, par le dispositif de réseau, desdits un ou plusieurs premiers objets de manière à ce qu'ils soient capables d'utiliser la ressource CB comprend :
lorsqu'une probabilité de conflit détectée est supérieure ou égale à un deuxième seuil, et lorsque N premiers objets capables d'utiliser la ressource CB existent déjà, la configuration, par le dispositif de réseau, de moins de N premiers objets afin qu'ils soient capables d'utiliser la ressource CB.

3. Procédé selon la revendication 1, comprenant en outre : la détection, par le dispositif de réseau, d'un taux d'utilisation de la ressource CB ; dans lequel la configuration, par le dispositif de réseau, desdits un ou plusieurs premiers objets afin qu'ils soient capables d'utiliser la ressource CB comprend :
lorsque le taux d'utilisation détecté est inférieur ou égal à un quatrième seuil, et lorsque M premiers objets capables d'utiliser la ressource CB existent déjà, la configuration, par le dispositif de réseau, de plus de M premiers objets afin qu'ils soient capables d'utiliser la ressource CB.

4. Procédé selon la revendication 1, comprenant en outre : la configuration, par le dispositif de réseau, d'un ou plusieurs deuxièmes objets de manière à ce qu'ils soient capables de prendre en charge la ressource CB, et l'envoi, par le dispositif de réseau, de deuxièmes informations de ressources CB, les deuxièmes informations de ressources CB étant utilisées pour indiquer que lesdits un ou plusieurs deuxièmes objets sont capables de prendre en charge la ressource CB ;
dans lequel la configuration, par le dispositif de réseau, desdits un ou plusieurs premiers objets afin qu'ils soient capables d'utiliser la ressource CB comprend : la configuration, par le dispositif de réseau, desdits un ou plusieurs premiers objets afin qu'ils soient capables d'utiliser la ressource CB, dans lesdits un ou plusieurs deuxièmes objets.

5. Procédé selon la revendication 4, comprenant en outre : la détection, par le dispositif de réseau, de conflits sur les ressources CB ; dans lequel
la configuration, par le dispositif de réseau, desdits un ou plusieurs deuxièmes objets afin qu'ils soient capables de prendre en charge la ressource CB comprend :
lorsqu'une probabilité de conflit détectée est supérieure ou égale à un premier seuil, et lorsque P deuxièmes objets capables de prendre en charge la ressource CB existent déjà, la configuration, par le dispositif de réseau, de moins de P deuxièmes objets de manière à ce qu'ils soient capables de prendre en charge la ressource CB.

6. Procédé selon la revendication 4, comprenant en outre : la détection, par le dispositif de réseau, d'un taux d'utilisation de la ressource CB ; dans lequel la configuration, par le dispositif de réseau, desdits un ou plusieurs deuxièmes objets afin qu'ils soient capables de prendre en charge la ressource CB comprend :
lorsque le taux d'utilisation détecté est inférieur ou égal à un troisième seuil, et lorsque Q deuxièmes objets capables de prendre en charge la ressource CB existent déjà, la configuration, par le dispositif de réseau, de plus de Q deuxièmes objets afin qu'ils soient capables de prendre en charge la ressource CB.

7. Procédé d'utilisation de ressources à base de conflit par un équipement d'utilisateur, UE, comprenant :
la réception, par l'équipement d'utilisateur, UE, de premières informations de ressources à base de conflit, CB,
les premières informations de ressources CB étant utilisées pour indiquer qu'un ou plusieurs premiers objets comprenant l'un ou une combinaison quelconque d'un UE, d'un support radio et d'un groupe d'UE, sont capables d'utiliser une ressource CB, et que lesdits un ou plusieurs premiers objets appartiennent à un sous-ensemble de tous les premiers objets qui comprend moins de la totalité des premiers objets, et
l'utilisation, par l'UE, de la ressource CB selon les premières informations de ressources CB.

8. Procédé selon la revendication 7, comprenant en outre :
la réception, par l'UE, de deuxièmes informations de ressources CB, les deuxièmes informations de ressources CB étant utilisées pour indiquer qu'un ou plusieurs deuxièmes objets sont capables de prendre en charge la ressource CB ; dans lequel l'utilisation, par l'UE, de la ressource CB selon les premières informations de ressources CB comprend : l'utilisation, par l'UE, de la ressource CB selon les premières informations de ressources CB et les deuxièmes informations de ressources CB.

9. Procédé selon la revendication 7, dans lequel, lorsque l'UE est en mode de réception discontinue, DRX (Discontinuous Reception), l'utilisation, par l'UE, de la ressource CB selon les premières informations de ressources CB comprend :
lorsque les premières informations de ressources CB satisfont à une première condition, et lorsque l'UE satisfait à une deuxième condition, le réveil de l'UE à partir d'un état de sommeil et la surveillance de la ressource CB, et l'utilisation de la ressource CB surveillée ;
la première condition comprenant l'un ou une combinaison quelconque des éléments suivants : l'UE est configuré pour être capable d'utiliser la ressource CB ; un groupe d'UE auquel appartient l'UE est configuré pour être capable d'utiliser la ressource CB ; au moins un support radio, RB (Radio Bearer), de l'UE est configuré pour être capable d'utiliser la ressource CB ; et au moins un RB de l'UE est configuré pour être capable d'utiliser activement la ressource CB ; et
la deuxième condition comprenant l'un ou une combinaison quelconque des éléments suivants : des données de liaison montante de l'équipement d'utilisateur arrivent, un rapport d'état de tampon, BSR (Buffer Status Report), est déclenché, des données de liaison montante de l'au moins un RB de l'UE arrivent, et un BSR est déclenché.

10. Dispositif de réseau, comprenant :
un premier module de configuration, configuré pour effectuer une configuration de telle sorte qu'un ou plusieurs premiers objets, comprenant l'un ou une combinaison quelconque d'un UE, d'un support radio et d'un groupe d'UE, soient capables d'utiliser une ressource à base de conflit, CB, lesdits un ou plusieurs premiers objets appartenant à un sous-ensemble de tous les premiers objets qui comprend moins de la totalité des premiers objets ; et
un module d'envoi, configuré pour envoyer des premières informations de ressources CB, les premières informations de ressources CB étant utilisées pour indiquer que lesdits un ou plusieurs premiers objets sont capables d'utiliser la ressource CB.

11. Dispositif de réseau selon la revendication 10, comprenant en outre : un module de détection, configuré pour détecter un conflit sur la ressource CB ou un taux d'utilisation de la ressource CB ; dans lequel
le premier module de configuration comprend :
une première unité de configuration, configurée, lorsque la probabilité de conflit détectée par le module de détection est supérieure ou égale à un deuxième seuil, et lorsque N premiers objets capables d'utiliser la ressource CB existent déjà, pour effectuer une configuration de telle sorte que moins de N premiers objets soient capables d'utiliser la ressource CB ; ou
une deuxième unité de configuration, configurée, lorsque le taux d'utilisation détecté par le module de détection est inférieur ou égal à un quatrième seuil, et lorsque M premiers objets capables d'utiliser la ressource CB existent déjà, pour effectuer une configuration de telle sorte que plus de M premiers objets soient capables d'utiliser la ressource CB.

12. Dispositif de réseau selon la revendication 10, comprenant en outre : un deuxième module de configuration, configuré pour effectuer une configuration de telle sorte qu'un ou plusieurs deuxièmes objets soient capables de prendre en charge la ressource CB ; dans lequel
le module d'envoi est en outre configuré pour envoyer des deuxièmes informations de ressources CB, les deuxièmes informations de ressources CB étant utilisées pour indiquer que lesdits un ou plusieurs deuxièmes objets sont capables de prendre en charge la ressource CB.

13. Dispositif de réseau selon la revendication 12, comprenant en outre : un module de détection, configuré pour détecter un conflit sur la ressource CB ou un taux d'utilisation de la ressource CB ; dans lequel
le deuxième module de configuration comprend :
une troisième unité de configuration, configurée, lorsque la probabilité de conflit détectée par le module de détection est supérieure ou égale à un premier seuil, et lorsque P deuxièmes objets capables de prendre en charge la ressource CB existent déjà, pour effectuer une configuration de telle sorte que moins de P deuxièmes objets soient capables de prendre en charge la ressource CB ; ou
une quatrième unité de configuration, configurée, lorsque le taux d'utilisation détecté par le module de détection est inférieur ou égal à un troisième seuil, et lorsque Q deuxièmes objets capables de prendre en charge la ressource CB existent déjà, pour effectuer une configuration de telle sorte que plus de Q deuxièmes objets soient capables de prendre en charge la ressource CB.

14. Equipement d'utilisateur, UE, comprenant :
un module de réception, configuré pour recevoir des premières informations de ressources à base de conflit, CB, les premières informations de ressources CB étant utilisées pour indiquer qu'un ou plusieurs premiers objets, comprenant l'un ou une combinaison quelconque d'un UE, d'un support radio et d'un groupe d'UE, sont capables d'utiliser une ressource CB, et que lesdits un ou plusieurs premiers objets appartiennent à un sous-ensemble approprié de tous les premiers objets qui comprend moins de la totalité des premiers objets, et
un module d'utilisation, configuré pour utiliser la ressource CB selon les premières informations de ressources CB reçues par le module de réception.

15. UE selon revendication 14, dans lequel
le module de réception est en outre configuré pour recevoir des deuxièmes informations de ressources CB, les deuxièmes informations de ressources CB étant utilisées pour indiquer qu'un ou plusieurs deuxièmes objets sont capables de prendre en charge la ressource CB ; et
le module d'utilisation est configuré pour utiliser la ressource CB selon les premières informations de ressources CB et les deuxièmes informations de ressources CB reçues par le module de réception.
